# EUROPEAN PATENT SPECIFICATION

(11) **EP 2 239 033 B1**
(45) Date of publication and mention of the grant of the patent: **20.11.2013**
(21) Application number: 10156238.7
(22) Date of filing: 11.03.2010
(51) Int. Cl.: B01D 46/00, D04H 1/544, D04H 1/549, D04H 1/55, B01D 39/16, B01D 46/10

(54) **Filter and method of manufacture**
Filter und Herstellungsverfahren dafür
Filtre et procédé de fabrication

(30) Priority: 20.03.2009 GB 0904769
(43) Date of publication of application: 13.10.2010
(60) Divisional application: 13188390.2
(73) Proprietor: Brentnall, Nicholas, Gloucestershire GL51 6QL (GB)
(72) Inventor: Brentnall, Nicholas, Gloucestershire GL51 6QL (GB)
(74) Representative: Jackson, Derek Charles

(56) References cited:
- US-A- 2 521 984
- US-A- 2 521 985
- US-A- 4 600 420
- US-A1- 2007 271 887

## Description

This invention relates to a filter of non-woven fibrous material and to a method of manufacturing such a filter.

It is common practice to manufacture filters of non-woven fibrous material by encasing peripheral regions of a filter pad in a frame formed around the filter pad by an injection moulding process, there being a seal between the periphery of the filter pad and the frame. The seal ensures that all of the fluid passes through the filter pad without by-passing the pad. The frame also provides support for the filter pad and improves handleability and durability thereof, for example allowing the filter to be compressed and washed.

The injection moulding process relies on axial compression of peripheral regions of the filter pad so as to eliminate any lofted non-woven material and to allow the injection moulding tool to seal with the filter pad around the periphery thereof. Compressing the filter pad makes it less permeable and affects its performance, considerably so with relatively thick filter pads (for example having a thickness greater than about 10 mm). On the other hand, if the filter pad is not compressed the injection moulding process will simply inject the plastics frame material throughout the entire filter pad rendering the pad useless. Such a compression technique is known, for example, from WO-A-2005079951.
US 2007/0271887 discloses a method of manufacturing a fluid filter comprising a frame surrounding the filter media, with a portion unitary with an outer portion of the filter media. A section of the filter media, pleated or pad, is inserted by hand or machine onto a stationary mold. An insertion mold is then inserted onto the filter media compressing the peripheral area of the filter media onto the horizontal and outwardly slanted surfaces of the stationary mold. The portion of filter media between the two molds is then made rigid by activating the thermosetting properties of the bicomponent fibers in the filter media. A heated plenum can be used to create the bond of the fibers in an outer portion of the filter media forming a unitary frame about filter media.

It is therefore desirable to provide a filter and a method of manufacturing such a filter which inhibits absorption of frame material beyond the periphery of the filter pad without the need for compressing the peripheral region of the filter pad. It is even more desirable to provide a filter and a method of manufacturing such a filter which eliminates the need for a separate frame while maintaining sufficient durability and handleability of the filter.

It is therefore an object of the present invention to provide a filter of non-woven fibrous material and a method of manufacturing such a filter which overcomes or at least ameliorates the disadvantages of known filters.
According to the present invention there is provided a method of manufacturing a filter comprising the steps of: providing a pad of non-woven fibrous material; providing plates (5, 7) including recesses which correspond substantially to the shape of the pad (1) to laterally compress and heat a peripheral region of the pad so as to form around the pad an edge of consolidated material which has been softened; and subsequently allowing the edge of consolidated material to harden, wherein the plates are movable towards and away from each other laterally of the peripheral region of the pad to engage and disengage the peripheral region of the pad.
The peripheral region of the pad may be heated substantially to the melting point of the fibrous material.
The heating means may comprise at least one electric heating element.
The pad may be supported on a support plate, for example of thermally insulating material.
If desired, the edge of the pad may be enclosed within a sleeve of different material. For example, the edge of the pad may be enclosed within a sleeve of high-temperature resistant paper. The sleeve may be sacrificial.
The non-woven fibrous material may be selected from a plastics material, such as polyester, polypropylene, nylon 6 or nylon 6/6.
For a better understanding of the present invention and to show more clearly how it may be carried into effect reference will now be made, by way of example, to the accompanying drawings in which:
Figure 1 is an exploded perspective view of one embodiment of an apparatus in a first configuration for effecting a method according to the present invention for producing a filter;
Figure 2 is a perspective view of the apparatus of Figure 1 in a second configuration; and
Figure 3 is a perspective view of one embodiment of a filter made by the method according to the present invention.

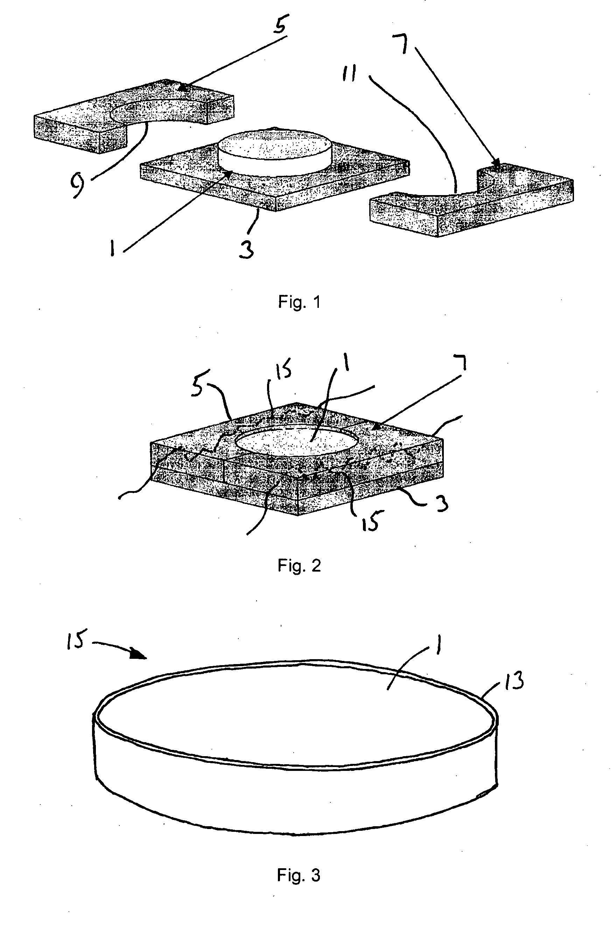

Figures 1 and 2 show an apparatus for producing a filter of non-woven fibrous material from a pad 1 of such material. The non-woven fibrous material may be, for example, a plastics material such as polyester, polypropylene, nylon 6 or nylon 6/6. The apparatus includes a support plate 3, for example of a thermally insulating material, for supporting the pad 1 and a pair of thermo-forming plates 5, 7 which are formed with recesses 9, 11. The plates 5, 7 are movable between a first, spaced configuration as shown in Figure 1 and a second, closed configuration as shown in Figure 2. The recesses 9, 11 are shaped and dimensioned such that they correspond to the shape of the periphery of the pad 1 and engage and compress the peripheral region of pad laterally to a small degree, while leaving the majority of the pad uncompressed. The thermo-forming plates 5, 7 each incorporate heating means, for example electric heating elements 15 (shown diagrammatically in Fig. 2), at least in the region of the recesses 9, 11 so as to heat the peripheral edge of the pad 1 substantially to the melting point of the material of the pad so as to soften and fuse the fibres to an extent sufficient to cause the fibres to consolidate and, when subsequently cooled and hardened, create a substantially solid edge 13 as shown in Figure 3 and to substantially prevent the passage of liquid in the event of subsequent injection moulding of a frame, or resin casting of a frame, because the casting tool can seal against the solidified edge of the filter pad. Consequently, there is no need to compress the pad during subsequent formation of a frame and the performance of the filter is improved over known filters.

In use of the apparatus of Figures 1 and 2, a filter pad 1 is placed on the support plate 3 in a predetermined location and the heated thermo-forming plates 5, 7 are moved together such that the recesses 9, 11 engage the periphery of the filter pad as shown in Figure 2 and compress the peripheral region of the pad to some degree. The thermo-forming plates also heat the peripheral region to a suitable temperature of substantially the melting point of the material of the filter pad so as to cause the material to soften. For polyester materials the melting temperature is generally about 265 degrees Celsius, for polypropylene materials the melting temperature is generally about 165 degrees Celsius, for nylon 6 the melting temperature is generally about 255 degrees Celsius, and for nylon 6/6 the melting temperature is about 255 degrees Celsius. Once the consolidated edge has been formed, the thermo-forming plates are withdrawn to a position such as that shown in Figure 1 and, once the solid edge has subsequently cooled and hardened sufficiently, the formed filter pad can be removed.

While the provision of a frame for the filter pad may be required for products that are intended as replacements for existing filters, it has been found that the solid edge 13 satisfies the requirements for durability and handleability and that a frame is no longer required, with the filter pad 1 and solid edge 13 forming a complete filter 15.
If desired, the edge of the filter pad 1 may be enclosed within a sleeve of different material to assist the forming and/or hardening process. For example, the edge of the filter pad may be enclosed within a sleeve of high-temperature resistant paper which facilitates heating, and therefore softening or melting, of the material of the filter pad, but which inhibits burning of the material. Such a sleeve may be sacrificial and may be used only once.

## Claims

1. A method of manufacturing a filter comprising the steps of: providing a pad (1) of non-woven fibrous material; providing plates (5, 7) including recesses which correspond substantially to the shape of the pad (1) and heating means to laterally compress and heat a peripheral region of the pad so as to form around the pad an edge of consolidated material (13) which has been softened; and subsequently allowing the edge of consolidated material to harden, **characterised in that** the plates (5, 7) are movable towards and away from each other laterally of the peripheral region of the pad (1) to engage and disengage the peripheral region of the pad.

2. A method according to claim 1, wherein the peripheral region of the pad is heated substantially to the melting point of the fibrous material.

3. A method according to claim 1 or 2, wherein the heating means comprises at least one electric heating element (15).

4. A method according to any one of claims 1 to 3, wherein the pad (1) is supported on a support plate (3).

5. A method according to any one of claims 1 to 4, wherein the edge of the pad (1) is enclosed within a sleeve of different material.

## Patentansprüche

1. Verfahren zur Herstellung eines Filters, das die folgenden Schritte beinhaltet:
Bereitstellen einer Unterlage (1) aus faserigem Vliesmaterial; Bereitstellen von Platten (5, 7) mit Aussparungen, die im Wesentlichen der Form der Unterlage (1) entsprechen, und Erhitzungsmitteln zum lateralen Komprimieren und Erhitzen einer peripheren Region der Unterlage, um einen Rand aus konsolidiertem Material (13), das erweicht wurde, um die Unterlage herum zu bilden; und nachfolgend Härtenlassen des Randes aus konsolidiertem Material, **dadurch gekennzeichnet, dass** die Platten (5, 7) lateral zu der peripheren Region der Unterlage (1) hin und davon weg beweglich sind, um in die periphere Region der Unterlage einzugreifen und sie freizugeben.

2. Verfahren nach Anspruch 1, wobei die periphere Region der Unterlage im Wesentlichen auf den Schmelzpunkt des faserigen Materials erhitzt wird.

3. Verfahren nach Anspruch 1 oder 2, wobei das Erhitzungsmittel wenigstens ein elektrisches Heizelement (15) umfasst.

4. Verfahren nach einem der Ansprüche 1 bis 3, wobei die Unterlage (1) auf einer Trägerplatte (3) gelagert ist.

5. Verfahren nach einem der Ansprüche 1 bis 4, wobei der Rand der Unterlage (1) in einer Hülse aus einem anderen Material eingeschlossen ist.

## Revendications

1. Procédé de fabrication d'un filtre comprenant les étapes consistant à : fournir un tampon (1) de matériau fibreux non tissé ; fournir des plaques (5,7) comprenant des creux qui correspondent essentiellement à la forme du tampon (1) et un moyen de chauffage pour comprimer latéralement et chauffer une zone périphérique du tampon de manière à former autour du tampon un bord de matériau consolidé (13) qui a été ramolli ; et laisser ensuite durcir le bord de matériau consolidé, **caractérisé en ce que** les plaques (5, 7) peuvent se rapprocher et s'éloigner l'une de l'autre latéralement par rapport à la zone périphérique du tampon (1) pour engager et désengager la zone périphérique du tampon.

2. Procédé selon la revendication 1, dans lequel la zone périphérique du tampon est chauffée essentiellement jusqu'au point de fusion du matériau fibreux.

3. Procédé selon la revendication 1 ou 2, dans lequel le moyen de chauffage comprend au moins un élément chauffant électrique (15).

4. Procédé selon l'une quelconque des revendications 1 à 3, dans lequel le tampon (1) repose sur une plaque de support (3).

5. Procédé selon l'une quelconque des revendications 1 à 4, dans lequel le bord du tampon (1) est enfermé dans un manchon de matériau différent.
